Europäisches Patentamt

European Patent Office

Office européen des brevets

(11) Publication number: **0 451 383 A1**

# EUROPEAN PATENT APPLICATION

(21) Application number: 90303858.6

(51) Int. Cl.⁵: **B29C 33/72, B24C 11/00**

(22) Date of filing: **10.04.90**

(43) Date of publication of application:
**16.10.91 Bulletin 91/42**

(84) Designated Contracting States:
**DE FR IT**

(71) Applicant: **SANYO TRADING CO., LTD.**
**11, 2-chome, Kanda-nishikicho**
**Chiyoda-ku Tokyo(JP)**

Applicant: **KABUSHIKI KAISHA FUJI KIHAN**
**471 Marushin-cho Kita-ku**
**Nagoya-shi Aichi-ken(JP)**

(72) Inventor: **Miyasaka, Yoshio**
**14-1 Nakashin-cho, 2-chome**
**Kasugai-Shi, Aichi-ken(JP)**
Inventor: **Onizawa, Masao**
**No. 303 Daiichifukaya-manshion 49, Issha**
**1-chome**
**Meito-ku, Nagoya-Shi, Aichi-ken(JP)**

(74) Representative: **Votier, Sidney David et al**
**CARPMAELS & RANSFORD 43, Bloomsbury**
**Square**
**London WC1A 2RA(GB)**

(54) **Method for cleansing molds.**

(57) A method for removing attached substances from the surface of a mold by spraying a powder comprising a thermosetting resin on the surface of the mold with a gas stream.

## Background of the Invention

### Field of the Invention

The present invention relates to a method for cleansing the surface of a mold by the blast method using a powder comprising a thermosetting resin.

### Description of the Prior Art

Usually molds are used for the fabrication of rubber or urethane. Materials of these molds are generally iron or aluminum or their hard chromium plated ones, and manufactured by electroforming, for instance.

While the mold is being used for the fabrication, materials constituting shaped article, such as rubber and the like, are attached to the surface of the mold and hence, it is necessary to remove off the attached substances by cleansing the surface of the mold at a certain frequency. Heretofore, cleansing with alkali solutions, press molding cleansing by mold cleansing rubber, and cleansing by the blast methods using glass beads, corn powder and walnut powder have been available for the cleansing of the mold.

Cleansing with alkali solution is a cleansing method which is generally used for cleansing rubber molding molds, and it is suitable for the cleansing of precise and complicated molds, usually using caustic soda solution. However, it entails the problems of requiring many hours for cleansing and being difficult to dispose of effluents. In order, further, to enhance mold use efficiency it is desirable to cleanse the molds at a mold temperature nearly equal to the molding temperature immediately after they were used for the fabrication, but cleansing with alkali solutions entails the problem of causing a considerable lowering of the mold temperature.

The press molding cleansing by the mold cleansing rubber is a method of incorporating a chemical having mold-cleansability into a compounding ingredient of unvulcanized rubber and causing the attachment of stains on the rubber surface simultaneously with the vulcanization of the rubber thereby removing off the stains, and it gains the advantage of rendering it possible to cleans with the mold mounted on molding apparatus. However, it entails the problems that in the cleansing of large molds, the amount of the mold cleansing rubber used goes greater, which pushes up cleansing costs, that in the case where the mold is greatly contaminated, it is necessary to cleanse several times, that in the case where the mold is complicated in its form, there is a feat that the cleansing rubber remains and that irritating smell is given off at the time of vulcanization.

In the mold cleansing by the blast treatment using glass beads it entails the problems that the mold is intensely abraded, that mold slag tends to occur, that hard chromium plating is damaged and that the amount of glass beads used is great because the glass beads are high in their crushed percent that they are hardly reused.

In the mold cleansing by the blast treatment using corn powder or walnut powder it entails the problems that it takes many hours for cleansing that it is no good to cleanse off substances attached to the mold and that it is no good in working environment that it is necessary to take a countermeasure against dust arising.

The present invention is designed to provide a novel mold cleansing method to solve the said problems with heretofore-used mold cleansing methods.

The present invention is designed to provide a method for removing off attached substances or stains from a mold without abrading the surface of the mold for the fabrication of rubber or urethane and without causing mold slag to occur.

Another object of the present invention is to provide a method capable of cleansing the mold in a short period of time while maintaining a mold temperature nearly equal to the molding temperature of shaped article.

A still another object of the present invention is to provide a cleansing method easy to dispose of cleansing materials after cleansing, using the cleansing materials in less amounts.

## Summary of the Invention

The present invention is concerned with a blast method to solve the said problems, and it is a method for removing attached substances from the surface of a mold by spraying a powder comprising a thermosetting resin on the surface of the mold with a gas stream.

The thermosetting resin used in the present invention may be either a single composition or a mixture of a plurality of compositions, and more preferably it should be a melamine resin. Further, the particle size of a powder comprising the thermosetting resin is not particularly limited, but it should preferably be 20 to 120 mesh as stipulated in JIS R-6001-1973. The powder may take any form for its particle form. The powder is not particularly limited for its particle hardness, but it should preferably have a Moh's hardness of 3 to 4. The powder can be obtained by puverizing masses, pellets or the like or hardened thermosetting resins by means of pulverizer.

The mold temperature immediately after fabrication was finished varies according the kind of the material used, and the mold temperature in the case, for instance, of fabricating rubber is 150 to 200°C. Because of cleansing the mold in such a high temperature condition, in the case of using a thermoplastic resin powder, it entails the problem that upon contact with the mold the thermoplastic resin powder is instantaneously melted to attach to the mold. Even in the case, further, where the mold temperature is close to room temperature, the temperature of the powder sprayed on the mold instantaneously rises to 150°C or thereabout, and in the case where the powder is the thermoplastic resin, it also entails the problem that a lowering of cleansing effect is caused because the powder is softened, causing a lowering of powder hardness. Moreover, it is also necessary that it is insoluble in oils or solvent attached to the mold. Consequently, it is indispensable for the powder used for cleansing to be the thermosetting resin.

Mold materials and technical fields in which molds are used, no matter what they may be, are suitable for the use of the method of the present invention. Molds are used, for instance, in the fields of rubber forming, tire forming, embossing, and urethane resin forming.

For methods of spraying the powder with the gas stream various blast methods are available, and dry blast methods are most suitable. As the dry blast methods are cited

(i) a gravitational blast method of putting the powder in a tank located higher than a nozzle and jetting the powder falling gravitationally on a discharge port provided in the bottom of the tank from the nozzle with a gas stream;

(ii) a direct pressure type blast method of enclosing the powder in a powder pumping tank, pumping a compressed gas into the bank and jetting the powder discharged from a discharge port provided in the bottom of the tank with the compressed gas and

(iii) a siphone type blast method of putting the powder into a tank located lower than a nozzle and jetting the powder discharged from a discharge port provided in the bottom of the tank by suction of a compressed gas from the nozzle with the compressed gas.

These blast methods each may be used.

Usually compressed air is used as the compressed gas. Usually its pressure is 3 to 10 kg/cm$^2$ in gauge pressure, and jet speed of the compressed gas from the nozzle is 50 to 240 m/second. Further, the amount of the powder used for cleansing, pressure of the compressed gas and jet speed may optionally be chosen according to the characteristics of the powder used and condition in which attached substances adhere to the mold surface.

The powder after it was used for the removal of substances attached to the mold can be reused by separating and recovering from the attached substances using conventional post-treatment equipment, such as cyclone and the like.

The mold can be cleansed either with the mold maintained in high temperature condition or after it was cooled nearby room temperature, and it can also be effected either with the mold mounted on the molding apparatus or after it was detached from the molding apparatus, which depends on a desired mold use cycle and molding apparatus used. In order to cut shortest the use cycle of the mold for the fabrication of rubber or the mold for the fabrication of tire it is sufficient to cleanse the mold according to the cleansing method of the present invention while maintaining nearly the mold temperature (150°C, for instance) immediately after the fabrication is finished and further without detaching the mold from the molding apparatus.

The present invention will schematically be explained by way of Example with the reference to a drawing hereinafter.

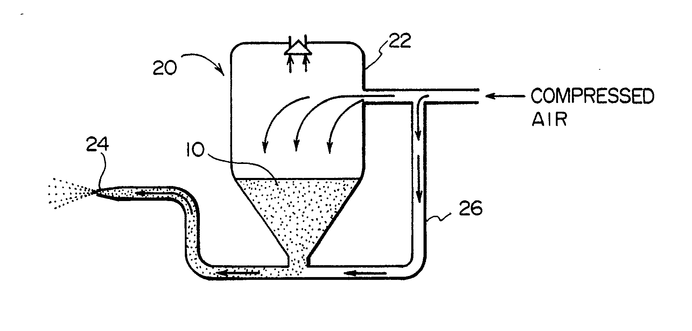

Brief Explanation of the Drawing

The drawing is a schematic diagram of the blast device suitable for the practice of the present invention.

Detailed Description of Preferred Embodiment

Using a powder with a particle size of 42 to 90 mesh comprising a melamine resin, substances attached to the surface of a mold for the fabrication of rubber were removed. For removal the direct pressure type blast device 20 was used. A powder 10 was put in a tank 22, and compressed air was pumped from a compressed air source into a tank 22 and a conveyor pipe 26. The amount of the compressed air pumped from the compressed air source was set at 1 Nm$^3$/minute, and pressure was set at 5 kg/cm$^2$ in gauge pressure. The amount of the powder used was set at 0.05-0.1 kg/hour. The powder discharged from a discharge port provided in the bottom of the tank 22 was conveyed with the compressed air in the conveyor pipe and jetted through a nozzle 24. The inner diameter of the nozzle was set at 90 mm, jet speed of the compressed air from the nozzle was set at 150 m/second, and the distance of from the nozzle to the mold surface was held at 150 to 200 mm. The powder jetted from the nozzle was sprayed on the surface of the mold thereby substances attached to the mold surface were removed off. The amount of the powder sprayed per 1 m$^2$ of the mold surface was set at 40 to 60 kg. After the attached substances were removed the mold surface was not observed to be abraded. Moreover, the attached substances were not observed to remain on the mold surface, and the powder was not observed to be attached to the mold surface.

Further, when the mold temperature at the time of cleansing was measured, it was 150°C, but the powder was not observed to deposit on the mold, and it does not make any difference as compared with cleansed condition in the case where the mold temperature at the time of cleansing was room temperature.

For comparison, using 100 to 120 mesh glass beads, attached substances on the mold surface were removed at the same conditions as the above, in consequence of which the mold surface was observed to be abraded by glass beads. In order, further, to cleanse the mold within the same hours as in Example the amount of the glass beads used per hour was required to be 5- to 10-fold as compared with the powder.

By cleansing the surface of the mold by following the method for the removal of attached substances according to the present invention the attached substances were thoroughly removed off from the surface of the mold, and abrasion of the mold surface, mold slag and damage to plating were not observed. Furthermore, the mold can be cleansed in a short time, and the mold can be cleansed while maintaining high temperature (150°C) condition and without detaching the mold from the molding apparatus as the case may be. The powder is lower in its crushed percent and can persist long, and it is sufficient to use it in less amounts for cleansing. Moreover, the powder is free of toxicity and contains no metal corrosive substances. It is hardly dissolvable in oils or solvents and it is also easy to effect the post-treatment of the powder used.

## Claims

1. A method for removing attached substances from the surface of a mold by spraying a powder comprising a thermosetting resin on the surface of the mold with a gas stream.

2. The method according to claim 1 in which the thermosetting resin a melamine resin.

3. The method according to claim 1 in which the particle size of the powder is 20 to 120 mesh.

European
Patent Office

**EUROPEAN SEARCH
REPORT**

Application Number

**EP 90 30 3858**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 8, no. 247 (E-278)[1684], 13th November 1984; & JP-A-59 124 137 (TOSHIBA K.K.) 18-07-1984 * Whole abstract * | 1 | B 29 C 33/72 B 24 C 11/00 |
| X | US-A-4 548 617 (TAKASHI NIYATANI et al.) * Whole document * | 1-3 | |
| X | US-A-4 545 155 (JUNJI NAKATA) * Whole document * | 1-3 | |
| X | JP-A-6 203 477 (MITSUI TOATSU CHEM.) * Whole abstract * | 1,2 | |
| X | US-A-3 410 124 (MAKOTO SUWA) * Whole document * | 1,3 | |
| X | WO-A-8 802 299 (FOSECO) * Whole document * | 1,3 | |
| X | PATENT ABSTRACTS OF JAPAN, vol. 11, no. 86 (M-572)[2533], 17th March 1987; & JP-A-61 241 069 (MITSUI TOATSU CHEM. INC.) 27-10-1986 * Whole abstract * | 1,3 | TECHNICAL FIELDS SEARCHED (Int. Cl.5) B 29 C B 24 C |
| P,X | EP-A-0 370 762 (SANYO TRADING) * Whole document * | 1-3 | |
| A | INTERNATIONAL POLYMER SCIENCE AND TECHNOLOGY, vol. 12, no. 11, 1985, pages T43-T52, Shawbury, Shrewsbury, GB; J. MATSUO: "Mould-cleaning methods. Part I. Mould cleaning with chemical products" | | |

−/−

The present search report has been drawn up for all claims

| Place of search | Date of completion of search | Examiner |
|---|---|---|
| The Hague | 17 December 90 | LABEEUW R.C.A. |

European
Patent Office

**EUROPEAN SEARCH
REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | INTERNATIONAL POLYMER SCIENCE AND TECHNOLOGY, vol. 12, no. 12, 1985, pages T33-T37, Shawbury, Shrewsbury, GB; T. YOKOYAMA et al.: "Mould-cleaning methods. (3) Mould-cleaning rubbers" <br> – – – – – | | |
| | | | **TECHNICAL FIELDS SEARCHED (Int. Cl.5)** |

The present search report has been drawn up for all claims

| Place of search | Date of completion of search | Examiner |
|---|---|---|
| The Hague | 17 December 90 | LABEEUW R.C.A. |

CATEGORY OF CITED DOCUMENTS
X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons
 
& : member of the same patent family, corresponding
document